# EUROPEAN PATENT APPLICATION

(11) **EP 2 874 116 A1**
(43) Date of publication of application: **20.05.2015**
(21) Application number: 13816658.2
(22) Date of filing: 12.07.2013
(51) Int. Cl.: G06Q 50/10

(54) **COMMUNICATION METHOD BETWEEN CONTENT REQUESTER AND CONTENT PROVIDER FOR PROVIDING CONTENT AND REAL-TIME STREAMING CONTENT IN CONTENT NAME-BASED CONTENT CENTRIC NETWORK**

(30) Priority: 13.07.2012 KR 20120076535
(71) Applicant: Samsung Electronics Co., Ltd., Suwon-si, Gyeonggi-do 443-742 (KR)
(72) Inventor: PARK, Joong Hong, Yongin-si Gyeonggi-do 446-712 (KR); KIM, Jae Hoon, Yongin-si Gyeonggi-do 446-712 (KR); JANG, Myeong Wuk, Yongin-si Gyeonggi-do 446-712 (KR)
(74) Representative: Grünecker Patent- und Rechtsanwälte PartG mbB
(86) International application number: PCT/KR2013/006272
(87) International publication number: WO 2014/010992

(57) **Abstract**

Provided is a communication method of a content requester to provide content in a Content-Centric Network (CCN) based on a content name, including generating a content request packet including an identifier indicating a content request based on a predetermined time unit to request content, transmitting the generated content request packet, and receiving segments of the content that correspond to the predetermined time unit.

## Description

### Technical Field

The following description relates to a communication method of a content requester and a content provider to provide content and real-time streaming content using a predetermined time unit in a Content-Centric Network (CCN) based on a content name.

### Background Art

In Content-Centric Networks (CCNs), packets are classified into content request packets and content response packets. A content request packet contains a name of content to be requested, and a content response packet contains requested content, a name of the requested content, and the like. The content request packet may be referred to as an "interest."

For example, when a content request packet is received, network equipment may search for content from a storage area of the network equipment based on a name of the content in a header of the content request packet. In this example, when the content is found, the network equipment may transfer the content to a content-requesting device. Thus, a CCN may reply to a content request packet when corresponding content is stored in a storage area of an intermediate node, regardless of a type of intermediate nodes, compared with a network based on an Internet Protocol (IP) that needs to receive content directly from the original owner of the content.

### Disclosure of Invention

### Technical solutions

In one general aspect, a communication method of a content requester to provide content in a Content-Centric Network (CCN) based on a content name, includes generating a content request packet including an identifier indicating a content request based on a predetermined time unit, to request the content, transmitting the content request packet, and receiving segments of the content that correspond to the predetermined time unit.

The content may include either real-time streaming content, or general content.

The generating may include generating a content request packet requesting the segments of the content, using a name of the content.

The generating may include adding the identifier to a header of the content request packet or to a name of the content.

The generating may include adding, to a header of the content request packet, information regarding a starting segment of the content and the predetermined time unit in which the content continues to be transmitted.

The communication method may further include transmitting a content request packet including information regarding a segment next to a segment received last by a content request packet corresponding to the predetermined time unit and a time unit next to the predetermined time unit, when the predetermined time unit expires.

The communication method may further include adjusting the predetermined time unit, based on a characteristic of the content requester and a network environment.

The communication method may further include storing the predetermined time unit corresponding to the content request packet in a Pending Interest Table (PIT).

The communication method may further include deleting an entry corresponding to the content from a PIT, in response to a cancellation response packet that enables a request for the content to be cancelled.

The deleting may include deleting the entry corresponding to the content from the PIT, using a timeout value included in the header of the content request packet.

The communication method may further include determining whether a missing segment or an out-of-order segment is included in the received segments, and waiting for a predetermined time interval, when the missing segment or the out-of-order segment is detected.

The communication method may further include determining whether the missing segment or the out-of-order segment is transmitted to the content requester for the predetermined time interval, generating a content request packet requesting the missing segment or the out-of-order segment, based on a result of the determining, and transmitting the content request packet requesting the missing segment or the out-of-order segment.

The content request packet requesting the missing segment or the out-of-order segment may have a name field including a segment number of the missing segment or the out-of-order segment, instead of including an identifier indicating a content request based on the predetermined time unit.

The generating of the content request packet requesting the missing segment or the out-of-order segment may include comparing a number of segments that are missing or out of order with a predetermined number, and generating content request packets that have different forms and that request the missing segment or the out-of-order segment, based on a result of the comparing.

The generating of the content request packets may include, when the number of the segments that are missing or out of order is equal to or less than the predetermined number, generating a content request packet including a segment number of the missing segment or the out-of-order segment.

The generating of the content request packets may include, when the number of the segments that are missing or out of order is greater than the predetermined number, generating a content request packet that requests the missing segment or the out-of-order segment and that may include an identifier indicating a content request based on the predetermined time unit.

The communication method may further include allocating a storage space for real-time streaming content to a content store, when the content is the real-time streaming content.

The communication method may further include storing a latest segment among received segments of the real-time streaming content in the storage space.

The communication method may further include requesting retransmission of the real-time streaming content using the latest segment, when a missing segment or an out-of-order segment is included in the segments of the real-time streaming content.

In another general aspect, a communication method of a content provider to provide content in a CCN based on a content name, includes receiving a content request packet including an identifier indicating a content request based on a predetermined time unit, determining whether the content is included in a content store or a buffer of the content provider, generating a content response packet including segments of the content, based on a result of the determining, the segments corresponding to the predetermined time unit, and transmitting the content response packet.

The content may include either real-time streaming content, or general content.

The determining may include determining whether the content is included in the content store or the buffer, using a name of the content.

The communication method may further include generating a cancellation response packet that enables a request for the content to be cancelled, when the content ends.

The generating of the cancellation response packet may include generating the cancellation response packet, by describing preset information in a segment number of a last segment of the content, or by setting a payload size of the last segment to a preset value.

The communication method may further include transmitting the cancellation response packet.

The receiving may include receiving a content request packet including information regarding a starting segment of the content and the predetermined time unit in which the content continues to be transmitted.

The receiving may include, when the predetermined time unit expires, receiving a content request packet including information regarding a segment next to a segment received last by a content request packet corresponding to the predetermined time unit and a time unit next to the predetermined time unit.

The receiving may include receiving a content request packet including a segment number of a first segment among segments of the content that are not stored in a content store of an intermediate node, and a time unit obtained by subtracting a time required to process a segment stored in the content store of the intermediate node from the predetermined time unit.

The communication method may further include receiving a content request packet requesting a missing segment or an out-of-order segment among segments of the content.

The content request packet requesting the missing segment or the out-of-order segment may have a name field including a segment number of the missing segment or the out-of-order segment, instead of including an identifier indicating a content request based on the predetermined time unit.

In still another general aspect, a communication method of a content provider to provide content in a CCN based on a content name, includes receiving a content request packet, determining whether the content request packet is based on a predetermined time unit, deciding which one of real-time streaming content based on the predetermined time unit and general content based on the predetermined time unit is requested by the content request packet, based on a result of the determining, generating a content response packet based on the deciding, and transmitting the content response packet.

The determining may include determining whether the content request packet is based on the predetermined time unit, based on determining whether an identifier indicating a content request based on the predetermined time unit is included in a header of the content request packet or a name of the content.

The deciding may include deciding, using information included in the header of the content request packet, which one of real-time streaming content based on the predetermined time unit and general content based on the predetermined time unit is requested by the content request packet

The generating may include generating a content response packet including segments of the real-time streaming content, when the real-time streaming content based on the predetermined time unit is decided to be requested.

The generating may include generating a content response packet including the general content based on the predetermined time unit, when the general content based on the predetermined time unit is decided to be requested.

The communication method may further include generating a cancellation response packet that enables a request for the content to be cancelled, when the content ends.

The generating of the cancellation response packet may include generating the cancellation response packet, by describing preset information in a segment number of a last segment of the content, or by setting a payload size of a last segment to a preset value.

The receiving may include receiving a content request packet including information regarding a predetermined time unit in which the content continues to be transmitted.

The communication method may further include receiving a content request packet requesting a missing segment or an out-of-order segment among segments of the content. The content request packet requesting the missing segment or the out-of-order segment may have a name field including a segment number of the missing segment or the out-of-order segment, instead of including an identifier indicating a content request based on the predetermined time unit.

The communication method may further include generating a content response packet including general content that is not based on the predetermined time unit, when the content request packet is determined not to be based on the predetermined time unit.

### Brief Description of Drawings

FIG. 1 is a diagram illustrating an example of an operation of processing a content request packet in a Content-Centric Network (CCN) based on a content name.
FIG. 2 is a diagram illustrating an example of an operation of a content requester and a content provider using a time-based interest protocol, to provide content in a CCN based on a content name.
FIG. 3 is a flowchart illustrating an example of a communication method of a content requester to provide content based on a predetermined time unit in a CCN based on a content name.
FIG. 4 is a flowchart illustrating an example of a communication method of a content provider to provide content based on a predetermined time unit in a CCN based on a content name.
FIG. 5 is a flowchart illustrating another example of a communication method of a content requester to provide content based on a predetermined time unit in a CCN based on a content name.
FIG. 6 is a flowchart illustrating an example of a communication method of a content requester to provide real-time streaming content based on a predetermined time unit in a CCN based on a content name.
FIG. 7 is a flowchart illustrating another example of a communication method of a content provider to provide content based on a predetermined time unit in a CCN based on a content name.
FIG. 8 is a flowchart illustrating an example of a communication method of a content provider to provide real-time streaming content based on a predetermined time unit in a CCN based on a content name.
FIG. 9 is a diagram illustrating an example of a method of ending a request for content in a CCN based on a content name.
FIG. 10 is a diagram illustrating an example of a change in a Pending Interest Table (PIT) of each of nodes between a content requester and a content provider using a time-based interest protocol, to provide content in a CCN based on a content name.
FIG. 11 is a diagram illustrating an example in which real-time streaming content is provided to a new content requester during providing of real-time streaming content based on the communication methods of FIGS. 6 and 8.
FIG. 12 is a flowchart illustrating an example of a communication method of a content provider when content based on a predetermined time unit, together with general content that is not based on a predetermined time unit, are transmitted in a CCN based on a content name.
FIG. 13 is a diagram illustrating an example of a method of restoring a hole generated during transmission of segments between a content requester and a content provider using a time-based interest protocol in a CCN.
FIG. 14 is a diagram illustrating an example of a method of processing a content store of a network node using a time-based interest protocol in a CCN.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

In the following description, a "content requester" refers to a communication device or a node that requests content or real-time streaming content in a Content-Centric Network (CCN), and a "content provider" refers to a communication device or a node that provides content or real-time streaming content that is requested by the content requester. The content provider may be understood to refer to an initial provider of corresponding content, as well as, an intermediate node including at least one portion of the corresponding content among intermediate nodes located in a route through which a content request packet is transferred.

Additionally, in the following description, a content request and content response scheme using a content request packet including an identifier indicating a content request based on a predetermined time unit may be expressed as a "time-based interest protocol." The "predetermined time unit" may be understood to be a predetermined time interval, or time duration.

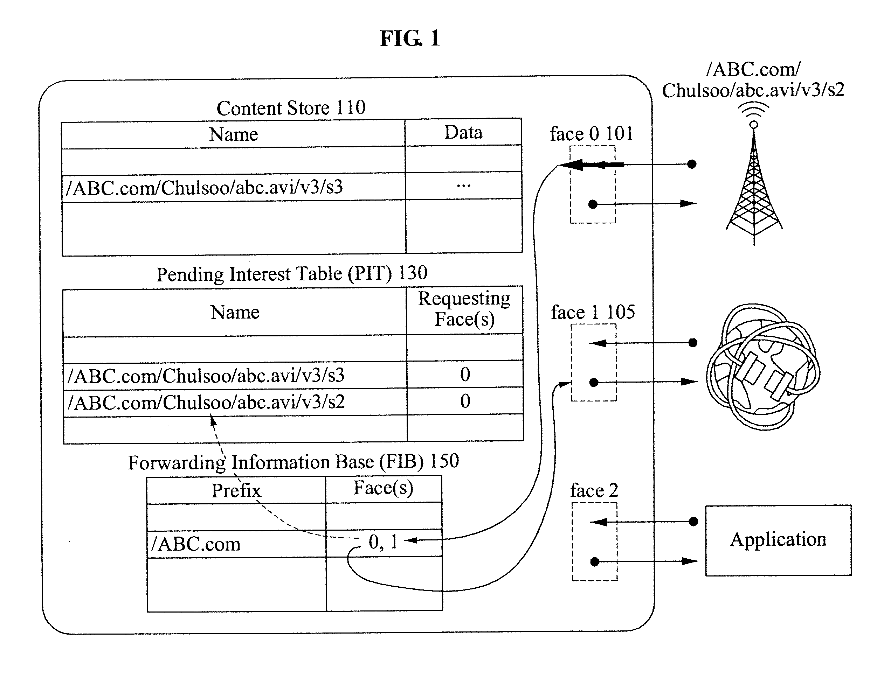

FIG. 1 illustrates an example of an operation of processing a content request packet in a CCN based on a content name.

In the CCN, a name of content may function as a compass to search for a node in which the content is stored. The name of the content may also distinguish the content from another content. Accordingly, each content may use its own name. In an example in which names of two contents are different from each other, the two contents may be determined to be different contents, despite the same information being included in the two contents. For example, when two files contain the same information, but have different names, namely "/ABC.com/sait/video/intro.avi," and "/ABC.com/sait/comm/video/intro.avi," the two files may be processed as being different contents. The above configuration may be very useful in distinguishing different contents with similar names.

FIG. 1 illustrates an operation of processing a content request packet based on a hierarchical name of content in a CCN, that is, a name-based network.

For example, referring to FIG. 1, a node included in the CCN is assumed to receive, from face 0 101, a content request packet that requests content corresponding to a hierarchical name of the content, for example, "/ABC.com/Chulsoo/abc.avi/v3/s2."

In this example, based on "/ABC.com/Chulsoo/abc.avi/v3/s2," a network module of the node may determine whether the requested content is included in a content store 110 of the node. In accordance with an illustrative example, the term "content store" may be used interchangeably with a "content cache."

When the content is determined to be stored in the content store 110, the node may return the content to face 0 101 via which the content request packet is received. In accordance with an illustrative example, the term "face" may be used interchangeably with an "interface."

When the content is determined not to be stored in the content store 110, the node may determine whether an entry stored with "/ABC.com/Chulsoo/abc.avi/v3/s2" is included in a Pending Interest Table (PIT) 130.

When the entry is determined to be included in the PIT 130, the node may add information associated with face 0 101 to the entry in the PIT 130.

When the entry is determined not to be included in the PIT 130, the node may search for the entry by performing a lookup based on the content name in a Forwarding Information Base (FIB) 150. In this example, the node may search for the entry based on longest-prefix-matching.

The node may select face 1 105, to which the content request packet is to be transferred, based on information registered in the FIB 150, and may transmit the content request packet to the selected face 1 105.

In this example, the node may register, in the PIT 130, information "0" regarding face 0 101, to route a content response packet that includes content and that corresponds to the content request packet to a node requesting the content when the content response packet is transferred. Additionally, one of faces other than face 0 101 may be selected as a face, to which the content request packet is to be transferred, based on the FIB 150.

A timeout value may be included in a header of the content request packet, and accordingly the PIT 130 may maintain the content request packet for a predetermined period of time that corresponds to, for example, the timeout value. The timeout value may be used in a method and system for providing content and real-time streaming content based on a predetermined time unit that will be described hereinafter.

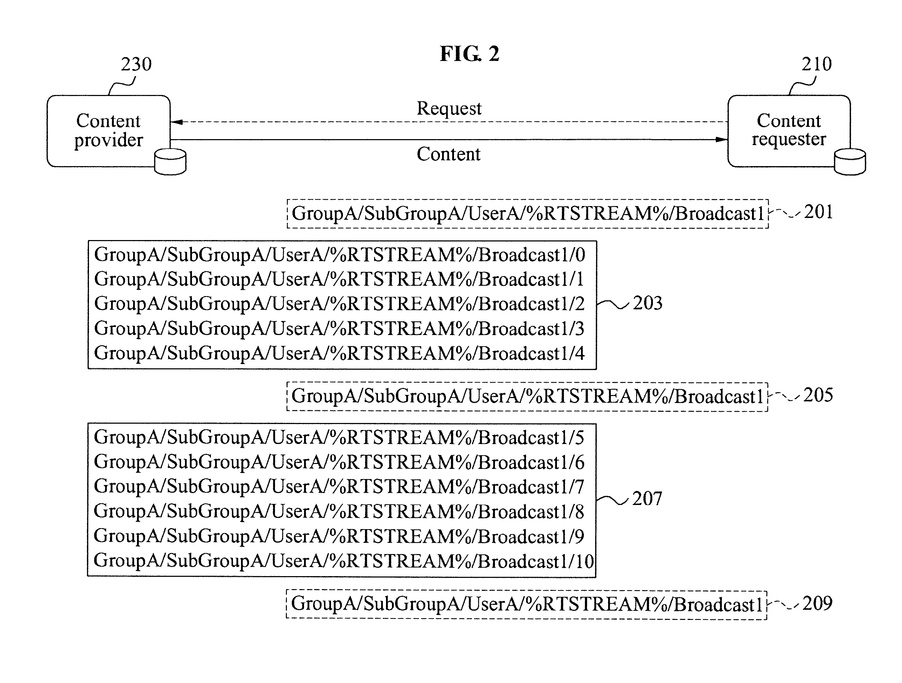

FIG. 2 illustrates an example of an operation of a content requester and a content provider using a time-based interest protocol, to provide content in a CCN based on a content name.

Content may be requested in a predetermined time unit, instead of a segment unit. Accordingly, using a single content request packet, a plurality of segments may be received.

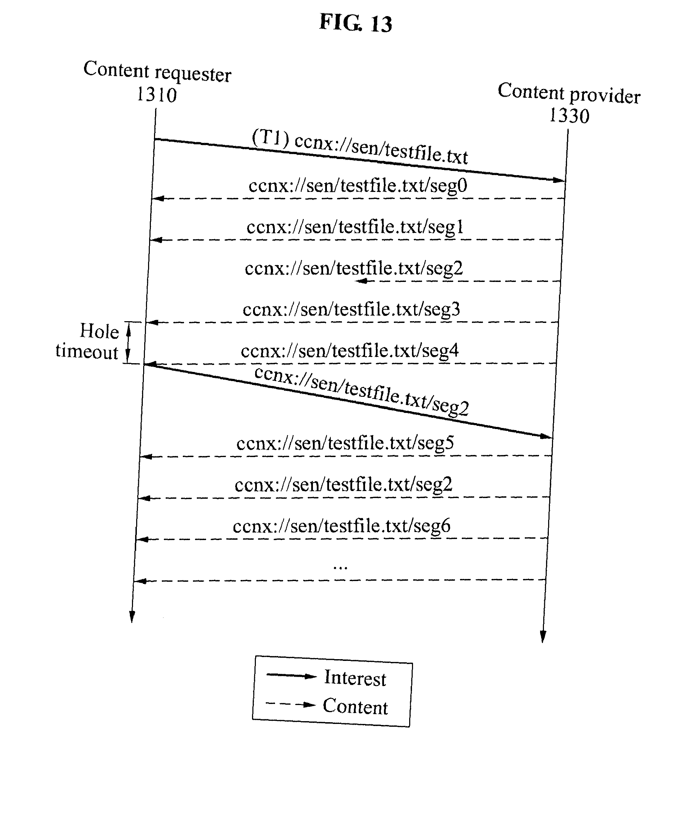

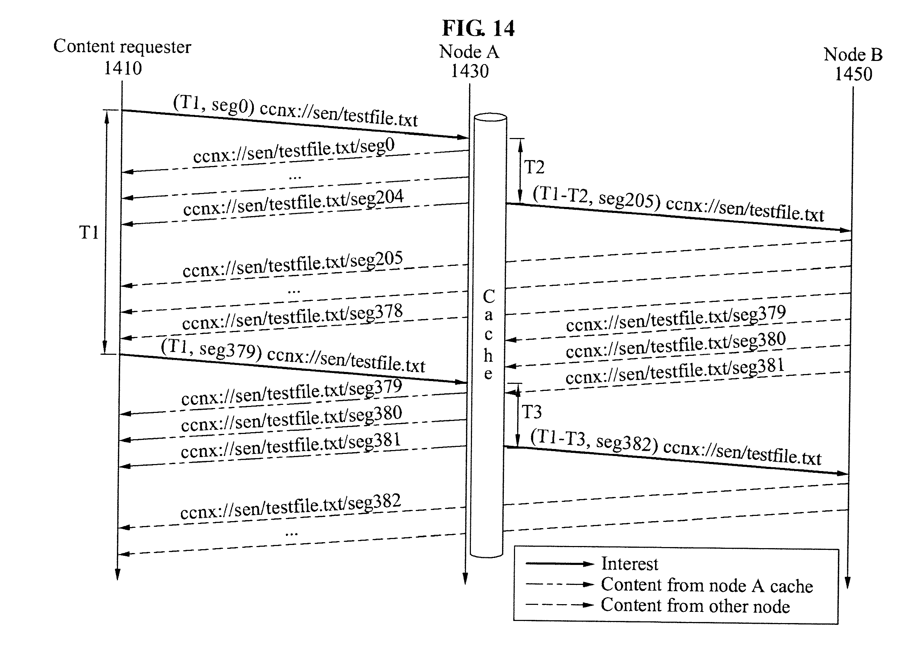

To request content in a predetermined time unit, a content requester 210 may add an identifier indicating a content request based on a predetermined time unit to a name of a content request packet, or may display a special identifier on a header of the content request packet. The identifier may be represented by, for example, "%TIMEBASED%," or other special symbols or numerals that are set in advance. An example of requesting content in a predetermined time unit by displaying a special identifier on a header of a content request packet will be further described with reference to FIGS. 13 and 14.

For example, when the identifier is assumed to be "%TIMEBASED%," the content request packet may have a name "GroupA/SubGroupA/UserA/%TIMEBASED%/Broadcast1."

When a content request packet including an identifier "%TIMEBASED%" is received, a content provider 230 or intermediate nodes may determine, based on a name (or an identifier) of the content request packet, that the content request packet requests content based on a predetermined time unit. Accordingly, the content provider 230 may generate a content response packet including segments of content, and may transmit the generated content response packet. The segments of the content may correspond to a predetermined time unit included in the content request packet.

Additionally, when the content request packet including the identifier "%TIMEBASED%" is received, the content provider 230 or intermediate nodes may manage a PIT since the received content request packet requests content in a predetermined time unit, and may forward content to another node or the content requester 210.

In addition, a name of the content response packet transmitted by the content provider 230 may include, for example, information of a segment, such as "GroupA/SubGroupA/UserA/%TIMEBASED%/Broadcast1/SegmentNum," or information regarding a predetermined time unit, such as "GroupA/SubGroupA/UserA/%TIMEBASED%/Broadcast1/TimeInfo," or both the information of the segment and the information regarding the predetermined time unit, such as "GroupA/SubGroupA/UserA/%TIMEBASED%/Broadcast1/SegmentNum/TimeInfo."

FIG. 2 illustrates a structure in which the content requester 210 requests content in a predetermined time unit and the content provider 230 transfers segments of the content.

The content requester 210 may transmit a single content request packet including content names of content based on a predetermined time unit, for example content names 201, 205 and 209, and may receive content response packets that include a plurality of segments, for example segments 203 and 207.

According to embodiments, content may be requested in a predetermined time unit, and all content segments corresponding to the predetermined time unit may be transferred, regardless of a number of the content segments. The content requester 210 may adaptively transmit a content request packet, by adjusting the predetermined time unit based on a characteristic of the content requester 210 or a network environment.

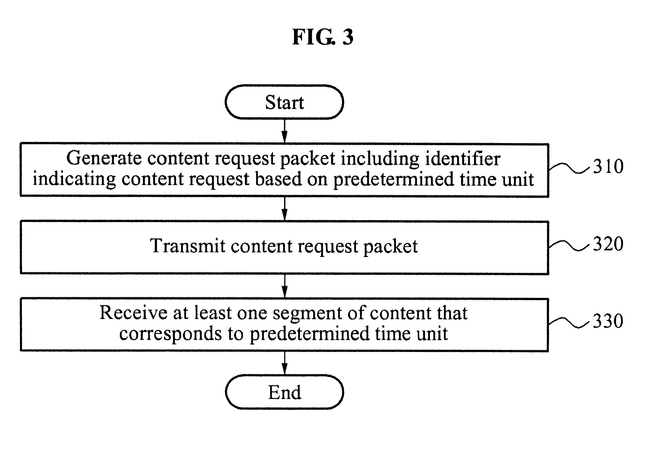

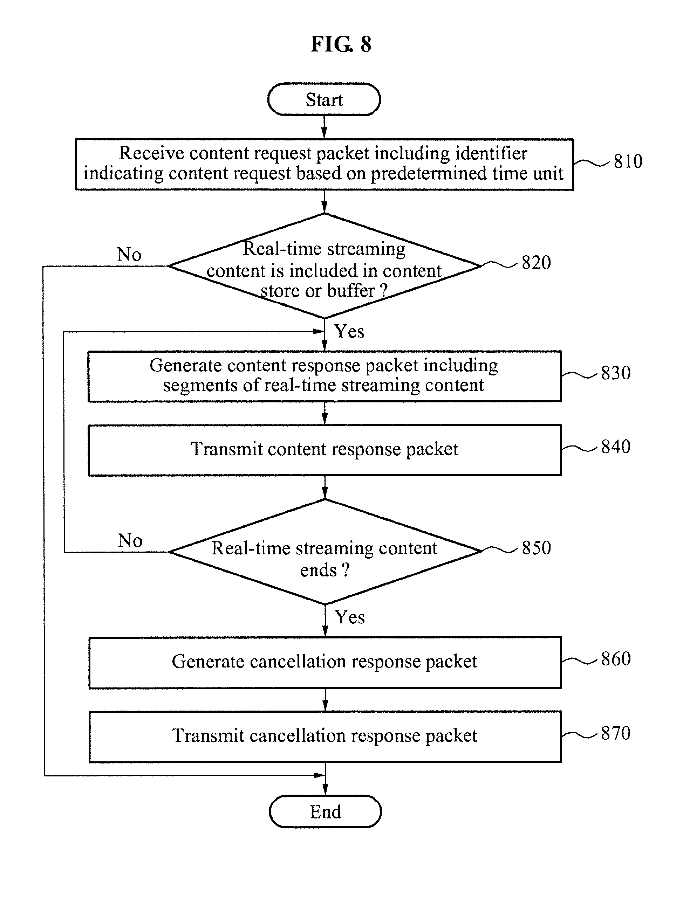

Hereinafter, various examples of a method of providing content between a content requester and a content provider based on a predetermined time unit will be described with reference to FIGS. 3 and 8.

FIG. 3 illustrates an example of a communication method of a content requester to provide content based on a predetermined time unit in a CCN based on a content name.

Referring to FIG. 3, in 310, the content requester generates a content request packet including an identifier indicating a content request based on a predetermined time unit. The identifier may be, for example, "%TIMEBASED%."

In an example, content may be requested using a predetermined time unit, instead of a content unit. In this example, the content requester may add an identifier indicating that a content request packet requests content based on a predetermined time unit, to a header of the content request packet, or to a name of the content. Additionally, the content requester may generate, using the name of the content, a content request packet that requests segments of the content.

In 320, the content requester transmits the content request packet. For example, either real-time streaming content, or general content may be requested by the content request packet. The "general content" may be understood to be content other than the real-time streaming content.

In 330, the content requester receives at least one segment of the content that corresponds to the predetermined time unit. The "at least one segment of the content that corresponds to the predetermined time unit" may be understood to be at least one segment of content transferred within the predetermined time unit.

The content requester may determine whether transmission of the at least one segment received in 330 fails. In an example in which the transmission of the at least one segment is determined to fail, the content requester may request retransmission of the at least one segment.

When real-time streaming content is received in 330, the content requester may process the received real-time streaming content using a scheme different from a scheme of processing general content. In an example in which real-time streaming content is received in 330, the content requester may store a latest segment in a storage space for the real-time streaming content. For example, when a missing segment or an out-of-order segment is included in segments of the real-time streaming content, the content requester may request retransmission of the real-time streaming content, using a latest segment stored in a content store. The "requesting retransmission of the real-time streaming content, using the latest segment stored in the content store" may indicate, for example, that when transmission of a segment 7 succeeds, when transmission of segments 8 and 9 fails, and when transmission of a segment 10 succeeds, the content requester may determine the transmission of the segments 8 and 9 to fail, based on the segment 10 stored in the content store, and may request retransmission of the segments 8 and 9.

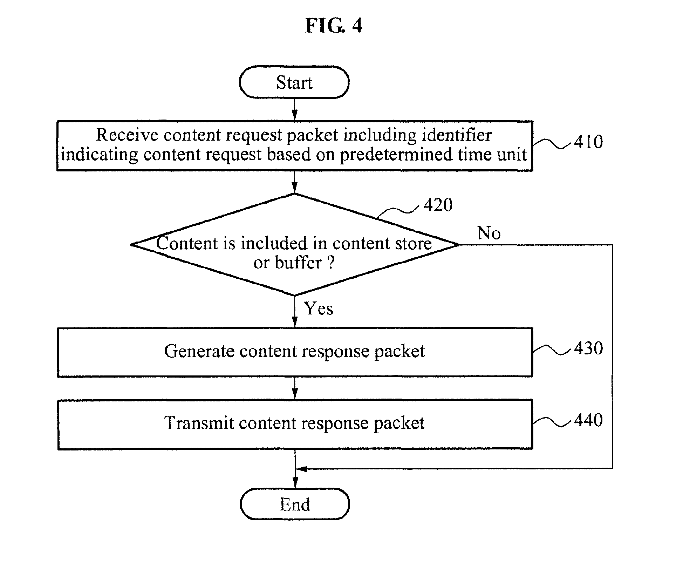

FIG. 4 illustrates an example of a communication method of a content provider to provide content based on a predetermined time unit in a CCN based on a content name.

Referring to FIG. 4, in 410, the content provider receives a content request packet including an identifier indicating a content request based on a predetermined time unit to request content.

In 420, the content provider determines whether the content is included in a content store or a buffer. For example, the content provider may use a name of the content to determine whether the content is included in the content store or the buffer.

In an example in which the content is determined to be included in the content store or the buffer in 420, the content provider may generate a content response packet in 430. The content response packet may include at least one segment of the content that corresponds to the predetermined time unit. For example, when content matching a name of content is included in an application, and the like in 420, the content provider may generate the content. The generated content may be generated as a content response packet in 430.

In 440, the content provider transmits the content response packet.

In another example in which the content is determined not to be included in the content store or the buffer in 420, the content provider may terminate an operation.

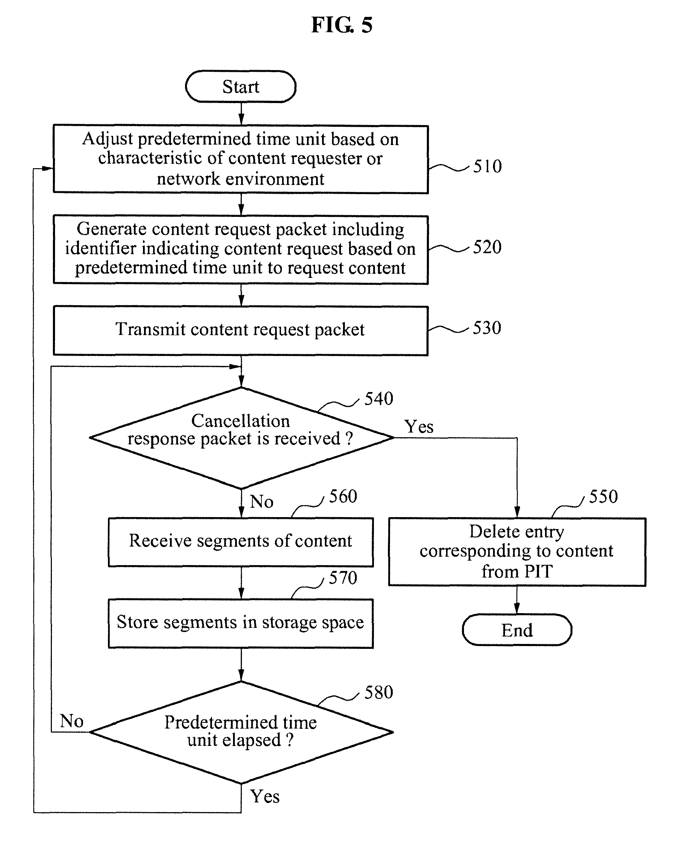

FIG. 5 illustrates another example of a communication method of a content requester to provide content based on a predetermined time unit in a CCN based on a content name.

Referring to FIG. 5, in 510, the content requester adjusts the predetermined time unit based on a characteristic of the content requester or a network environment. In an example in which the content requester is assumed to be a terminal with high mobility, the predetermined time unit may be shortened, in comparison to an example in which the content requester is a fixed communication apparatus. In another example in which severe interference by the network environment occurs or a large number of losses occur, the predetermined time unit may be shortened, in comparison to an example in which gentle interference by the network environment occurs or a small number of losses occur. Operation 510 is performed first, but there is no limitation thereto, and accordingly the predetermined time unit may be adjusted in subsequent operations.

In 520, the content requester generates a content request packet including an identifier indicating a content request based on a predetermined time unit to request content.

As described above, to fetch a plurality of content segments using a single content request, a predetermined time unit may be used, instead of a content unit.

Accordingly, the content requester may add an identifier indicating that the content request packet requests content based on the predetermined time unit to a header of the content request packet or to a name of content. Additionally, the content requester may generate a content request packet requesting segments of the content, by using the name of the content.

For example, when a user A included in a subgroup A in a group A requests content "Broadcast1," and when an identifier "%TIMEBASED%" indicates that a content request packet requests content based on the predetermined time unit, a content request packet requesting the content "Broadcast1" may have a name of "GroupA/SubGroupA/UserA/%TIMEBASED%/Broadcast1."

In an example, the content requester may include information associated with a predetermined time unit in a header of a content request packet requesting content based on the predetermined time unit. In another example, when a predetermined unit time (for example, a time corresponding to a timeout value included in the header of the content request packet) elapses, the content requester may enable the content request packet to be expired using the timeout value.

In 530, the content requester transmits the content request packet.

Subsequently, the content requester may receive a response to the content request packet.

In 540, the content requester determines whether a cancellation response packet is received as a response to the content request packet. The cancellation response packet may be used to cancel a request for the content. In an example in which the cancellation response packet is determined to be received in 540, the content requester may delete an entry corresponding to the content from a PIT in 550, and may terminate an operation.

For example, intermediate nodes located in a route, through which the content request packet is transferred, may also determine whether the cancellation response packet is received. When the cancellation response packet is determined to be received, the intermediate nodes may delete the entry corresponding to the content from the PIT.

In another example in which the cancellation response packet is determined not to be received in 540, the content requester may receive segments of the content that correspond to the predetermined time unit in 560. In this example, the "segments of the content that correspond to the predetermined time unit" may be understood to be segments required to play back the content for the predetermined time unit.

For example, when the predetermined time unit is assumed to be 5 seconds (s), the content requester may receive segments required to play back content "Broadcast1" for 5 s. In this example, when five segments, for example the segments 203 of FIG. 2, correspond to 5 s, the content requester may receive five segments. Additionally, when six segments, for example the segments 207 of FIG. 2, correspond to 5 s, the content requester may receive six segments.

In 570, the content requester stores, in a content store, at least one segment of the content.

In 580, the content requester determines whether the predetermined time unit elapsed.

In an example in which the predetermined time unit elapsed in 580, the content requester may adjust the predetermined time unit in 510, to generate a new content request packet.

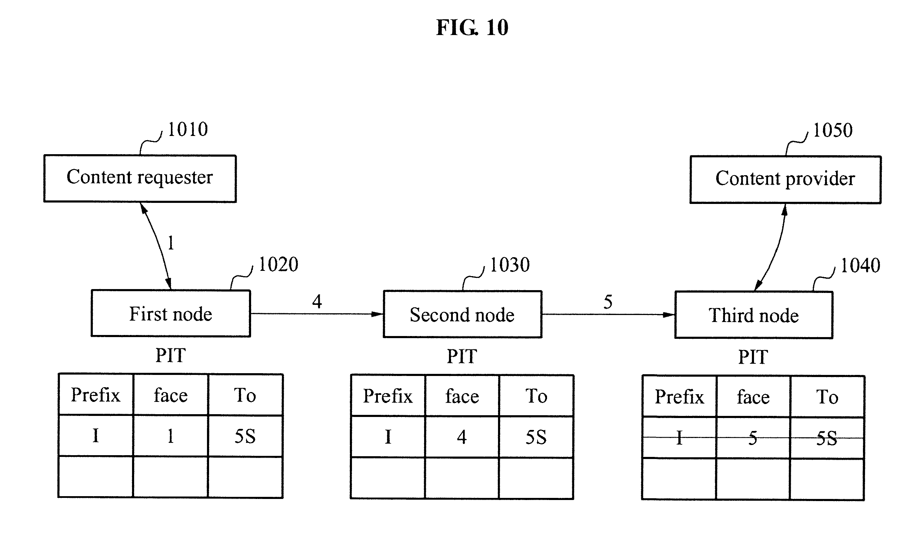

In another example in which the predetermined time unit did not elapse in 580, the content requester may determine whether the cancellation response packet is received in 540. In still another example in which a content request packet requesting content based on a time unit, set in advance, is received from other nodes in the CCN, the content requester may store the time unit in a PIT of the content requester. A configuration of a PIT in an example in which a content request packet requesting content based on a predetermined time unit is received will be described with reference to FIG. 10.

The operations described above with reference to FIG. 5 may also be performed in intermediate nodes located in a route, through which a content request packet is transferred.

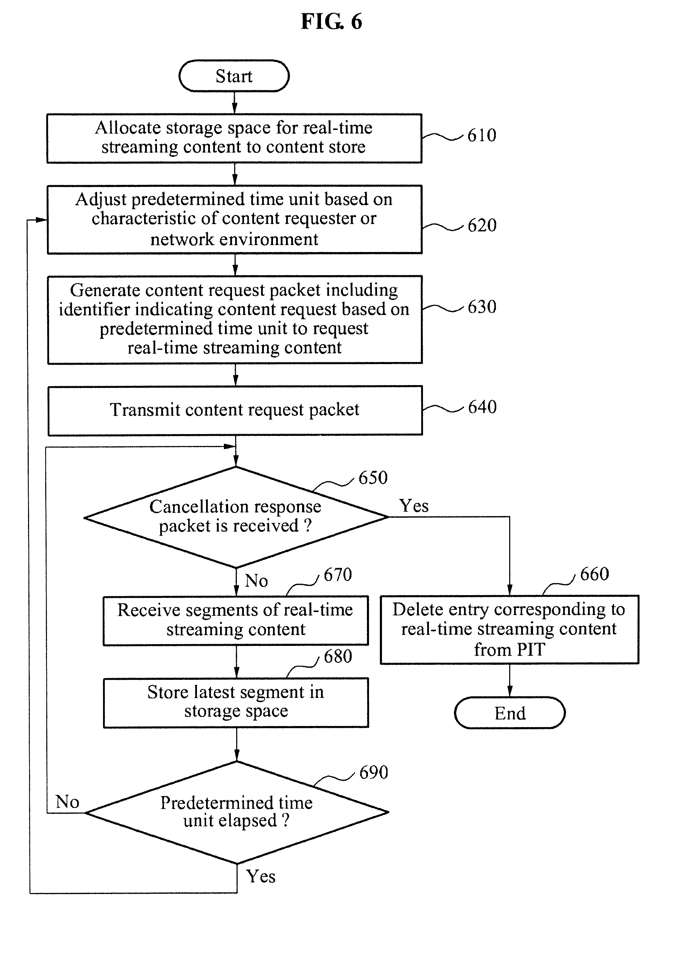

FIG. 6 illustrates an example of a communication method of a content requester to provide real-time streaming content based on a predetermined time unit in a CCN based on a content name.

Referring to FIG. 6, in 610, the content requester allocates a storage space for segment(s) of the real-time streaming content to a content store.

In 620, the content requester adjusts the predetermined time unit based on a characteristic of the content requester or a network environment.

In 630, the content requester generates a content request packet including an identifier indicating a content request based on a predetermined time unit to request real-time streaming content.

As described above, to fetch a plurality of content segments using a single content request, a predetermined time unit may be used, instead of a content unit.

Accordingly, the content requester may add an identifier indicating that the content request packet requests content based on the predetermined time unit to a header of the content request packet or to a name of real-time streaming content. Additionally, the content requester may generate a content request packet requesting segments of the real-time streaming content, by using the name of the real-time streaming content.

For example, when a user A included in a subgroup A in a group A requests real-time streaming content "Broadcast1," and when an identifier "%TIMEBASED%" indicates that a content request packet requests content based on the predetermined time unit, a content request packet requesting the real-time streaming content "Broadcast1" may have a name of "GroupA/SubGroupA/UserA/%TIMEBASED%/Broadcast1."

In an example, the content requester may include information associated with a predetermined time unit in a header of a content request packet requesting content based on the predetermined time unit. In another example, when a predetermined unit time (for example, a time corresponding to a timeout value included in the header of the content request packet) elapses, the content requester may enable the content request packet to be expired using the timeout value.

In 640, the content requester transmits the content request packet.

Subsequently, the content requester may receive a response to the content request packet.

In 650, the content requester determines whether a cancellation response packet is received as a response to the content request packet. The cancellation response packet may be used to cancel a request for the real-time streaming content. In an example in which the cancellation response packet is determined to be received in 650, the content requester may delete an entry corresponding to the real-time streaming content from a PIT in 660, and may terminate an operation.

For example, intermediate nodes located in a route, through which the content request packet is transferred, may also determine whether the cancellation response packet is received. When the cancellation response packet is determined to be received, the intermediate nodes may delete the entry corresponding to the content from the PIT.

In another example in which the cancellation response packet is determined not to be received in 650, the content requester may receive segments of the real-time streaming content that correspond to the predetermined time unit in 670. In this example, the "segments of the real-time streaming content that correspond to the predetermined time unit" may be understood to be segments required to play back the real-time streaming content for the predetermined time unit.

For example, when the predetermined time unit is assumed to be 5 s, the content requester may receive segments required to play back real-time streaming content "Broadcast1" for 5 s. In this example, when five segments, for example the segments 203 of FIG. 2, correspond to 5 s, the content requester may receive five segments. Additionally, when six segments, for example the segments 207 of FIG. 2, correspond to 5 s, the content requester may receive six segments.

In 680, the content requester stores a latest segment among the received segments in the storage space allocated in 610.

In 690, the content requester determines whether the predetermined time unit elapsed.

In an example in which the predetermined time unit elapsed in 690, the content requester may adjust the predetermined time unit in 620, to generate a new content request packet.

In another example in which the predetermined time unit did not elapse in 690, the content requester may determine whether the cancellation response packet is received in 650. Typically, to increase efficiency in a CCN, each node may include a content store, and may respond to a repetitive request. However, it may be inefficient to store all segments of content in a content store. Accordingly, by storing only a predetermined number of segments or a latest segment, it is possible to reduce a control overhead in a network through a minimum content request, and to maximize an efficiency of a content store.

In still another example in which a content request packet requesting real-time streaming content based on a time unit, set in advance, is received from other nodes in the CCN, the content requester may store the time unit in a PIT of the content requester.

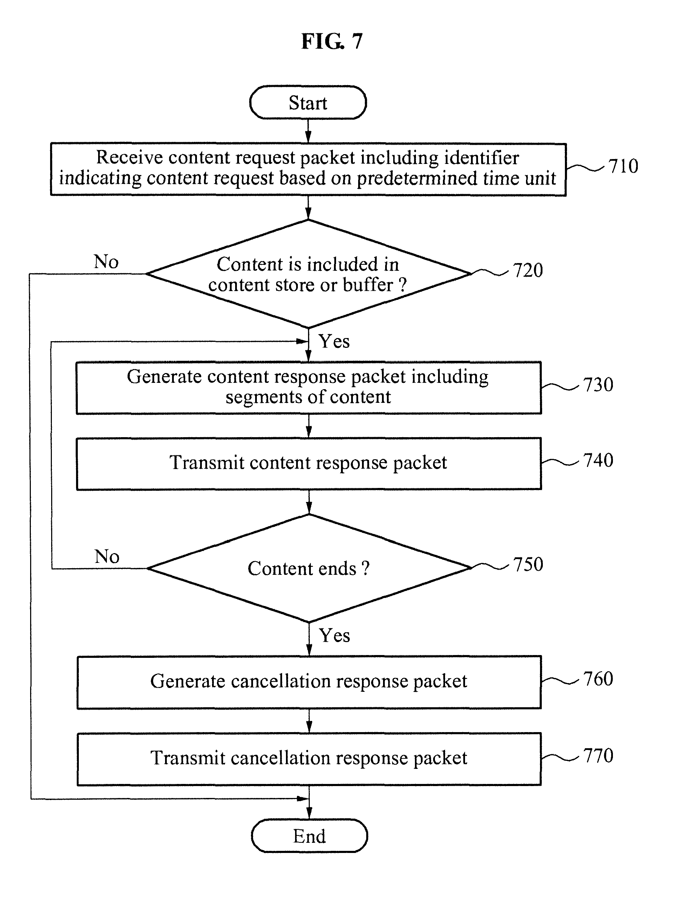

FIG. 7 illustrates another example of a communication method of a content provider to provide content based on a predetermined time unit in a CCN based on a content name.

Referring to FIG. 7, in 710, the content provider receives a content request packet including an identifier indicating a content request based on a predetermined time unit to request content.

In 720, the content provider determines whether the content is included in a content store or a buffer. In 720, the content provider may use a name of the content, to determine whether the content is included in the content store or the buffer. In an example in which the content is determined not to be included in the content store or the buffer in 720, the content provider may terminate an operation. As described above with reference to FIG. 1,when it is determined that corresponding content is not included in a content store, each node in the CCN, for example a content provider, may determine whether an entry stored with the same content name is included in a PIT, and may perform a subsequent operation. However, description of the above operation in the CCN is given with reference to FIG. 1, and accordingly further description thereof is omitted herein.

In another example in which the content is determined to be included in the content store or the buffer in 720, the content provider may generate a content response packet including segments of the content that correspond to the predetermined time unit in 730, and may transmit the generated content response packet in 740.

In 750, the content provider determines whether the content ends.

In an example in which the content is determined to end in 750, the content provider may generate a cancellation response packet in 760, and may transmit the cancellation response packet to a content requester in 770. The cancellation response packet may be used to request the content requester to cancel a request for the content. In this example, the cancellation response packet may be transferred to intermediate nodes located in a route from the content provider to the content requester.

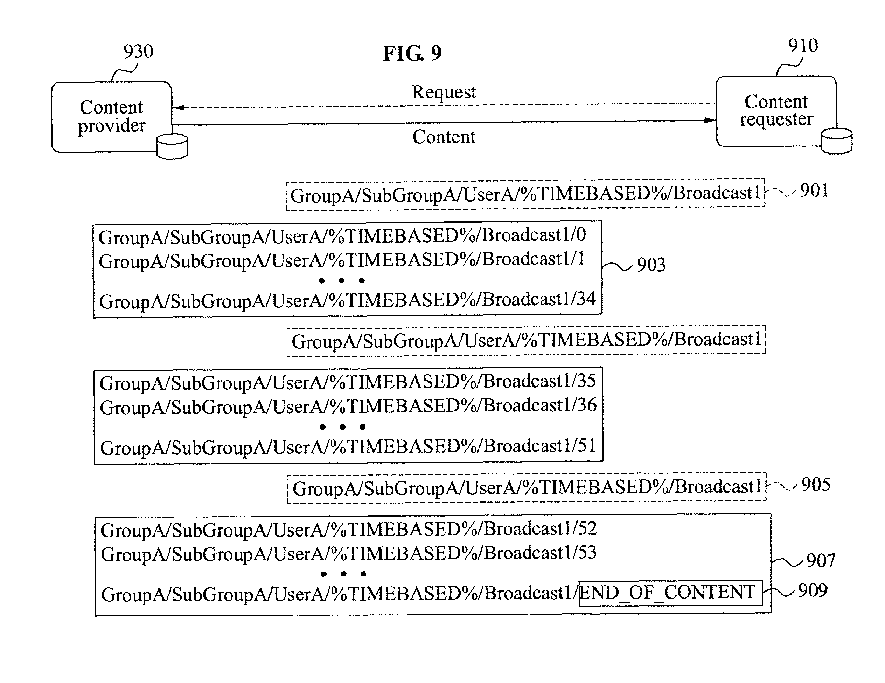

For example, when a cancellation response packet is received, a node, for example an intermediate node or a content requester, may end a received request for content by either deleting an entry of content from a PIT and the like, or by setting a timeout value to "0." An example in which a content provider ends a content request will be described with reference to FIG. 9.

FIG. 8 illustrates an example of a communication method of a content provider to provide real-time streaming content based on a predetermined time unit in a CCN based on a content name.

Referring to FIG. 8, in 810, the content provider receives a content request packet including an identifier indicating a content request based on a predetermined time unit to request real-time streaming content.

In 820, the content provider determines whether the real-time streaming content is included in a content store or a buffer. In 820, the content provider may use a name of the real-time streaming content to determine whether the real-time streaming content is included in the content store or the buffer. The buffer may be a buffer for streaming. Accordingly, the content provider may respond to a request for content that is not included in the content store, for example, content stored in a buffer for a streaming service and the like.

In an example in which the real-time streaming content is determined not to be included in the content store or the buffer in 820, the content provider may terminate an operation. As described above with reference to FIG. 1,when it is determined that corresponding content is not included in a content store, each node in a CCN, for example a content provider, may determine whether an entry stored with the same content name is included in a PIT, and may perform a subsequent operation. Description of the above operation in the CCN is given with reference to FIG. 1, and accordingly further description thereof is omitted herein.

In another example in which the real-time streaming content is determined to be included in the content store or the buffer in 820, the content provider may generate a content response packet including segments of the real-time streaming content that correspond to the predetermined time unit in 830, and may transmit the generated content response packet in 840.

In 850, the content provider determines whether the content ends.

In an example in which the real-time streaming content is determined to end in 850, the content provider may generate a cancellation response packet that cancels a request for the real-time streaming content in 860, and may transmit the cancellation response packet to a content requester in 870. In this example, the cancellation response packet may be transferred to intermediate nodes located in a route from the content provider to the content requester.

In another example in which the real-time streaming content is determined not to end in 850, the content provider may generate a content response packet including segments of the real-time streaming content that correspond to the predetermined time unit in 830.

For example, when a cancellation response packet is received, a node, for example an intermediate node or a content requester, may end a received request for real-time streaming content by either deleting an entry of the real-time streaming content from a PIT and the like, or by setting a timeout value to "0."

FIG. 9 illustrates an example of a method of ending a request for content in a CCN based on a content name.

Referring to FIG. 9, when the content ends in the CCN, a content provider 930 may notify end of the content, using a scheme described below.

When a content request packet 901 requesting content based on a predetermined time unit is received from a content requester 910, the content provider 930 may transmit at least one content response packet including segments of the content, for example a content response packet 903. It is assumed that a content response packet 907 that responds to a content request packet 905 transmitted by the content requester 910 includes a last segment of the content.

When transmission of the content is terminated, the content provider 930 may describe preset information 909, for example "END_OF_CONTENT," in a segment number of the last segment, and may transmit the content with the predetermined information 909.

Additionally, when transmission of the content is terminated, the content provider may set a payload size of the last segment of the content to a preset value, for example "0," and may transmit the content. For example, when a payload size of a last segment of real-time streaming content is set to "0," real-time streaming content stored in a content store of each node in a route, through which corresponding real-time streaming content is transmitted, may be automatically timed out, and may be deleted.

FIG. 10 illustrates an example of a change in a PIT of each of nodes between a content requester and a content provider using a time-based interest protocol, to provide content in a CCN based on a content name.

Hereinafter, it is assumed that a first node 1020, a second node 1030, and a third node 1040 are used to transfer a content request packet from a content requester 1010 to a content provider 1050, and are assumed not to include content "I" requested by the content requester 1010.

Additionally, the first node 1020 is assumed to receive a content request packet via face "1" from the content requester 1010, and the second node 1030 is assumed to receive the content request packet via face "4" from the first node 1020. The third node 1040 is assumed to receive the content request packet via face "5" from the second node 1030.

Referring to FIG. 10, when a content request packet including an identifier indicating a content request based on a predetermined time unit is received from the content requester 1010, the first node 1020 may describe, in an entry of a PIT of the first node 1020, a name of the real-time streaming content "I" requested by the content requester 1010, and the face "1" via which the content request packet is received. In addition, the first node 1020 may store, in the PIT, a name of a content request packet that requests the content "I," or a predetermined time unit "5" s recognized based on a header of the content request packet.

Similarly, the second node 1030 and the third node 1040 may also manage their respective PITs, and may transfer the content request packet to the content provider 1050. Subsequently, in an example, the third node 1040 may receive a content response packet corresponding to the content "I" from the content provider 1050 and may transfer the received content response packet to the second node 1030. In another example, the third node 1040 may receive a cancellation response packet used to cancel a request for content based on an end of the content "I," and may delete an entry of the content from the PIT.

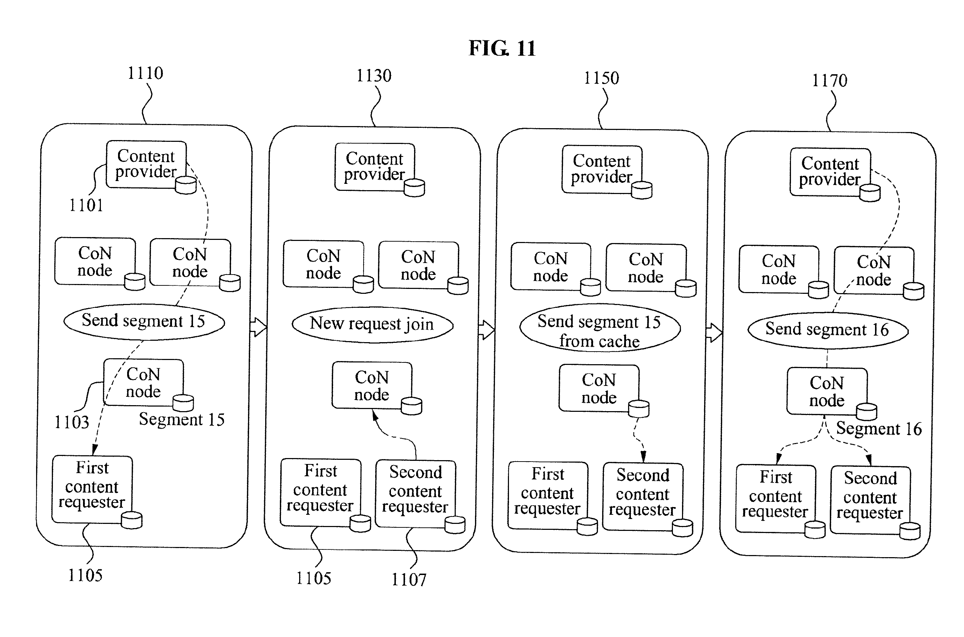

FIG. 11 illustrates an example in which real-time streaming content is provided to a new content requester during providing of real-time streaming content based on the communication methods of FIGS. 6 and 8.

Referring to FIG. 11, nodes in a CCN, for example CoN nodes, may provide real-time streaming content, in response to a request by a new node.

Hereinafter, it is assumed that, while a content provider 1101 provides a first content requester 1105 with segments of real-time streaming content, a new content requester, namely, a second content requester 1107 desires to receive the same real-time streaming content.

As illustrated in a box 1110 of FIG. 11, the content provider 1101 may transmit segments of real-time streaming content to the first content requester 1105 through the nodes. In this example, a latest segment among the segments of the real-time streaming content, for example a segment 15, may be stored in a content store of an intermediate node 1103.

Subsequently, when the second content requester 1107 requests the real-time streaming content, a request by the second content requester 1107 for the real-time streaming content may be transferred to the intermediate node 1103, as illustrated in a box 1130 of FIG. 11. The intermediate node 1103 may transmit the segment 15 stored in the content store to the second content requester 1107, as illustrated in a box 1150 of FIG. 11.

When a new segment 16 of the real-time streaming content is received from the content provider 1101, the intermediate node 1103 may provide the segment 16 to both the first content requester 1105 and the second content requester 1107, as illustrated in a box 1170 of FIG. 11.

A content store of each of nodes in the CCN may store an enormous amount of information, however, there is a limitation to unlimitedly storing information. For example, when each of the nodes stores all segments of real-time streaming content, a content store may be occupied by most of the real-time streaming content. Since the real-time streaming content is hardly requested over time, due to a characteristic of the real-time streaming content, it may be difficult to smoothly operate the CCN.

Therefore, only a latest segment among segments of real-time streaming content, or only a predetermined number of segments may be stored in a content store, and accordingly a storage space may be effectively used. Additionally, only the latest segment may be stored in the content store, and thus an operation in which a content requester acquires information regarding segments of currently provided real-time streaming content may not be required.

In addition, in a network environment tangled like a cobweb, a content store includes information regarding a latest segment among segments of real-time streaming content, despite an order of the segments being reversed. Thus, it is possible to ignore previous segments that are already transferred, and to prevent the order of the segments from being reversed.

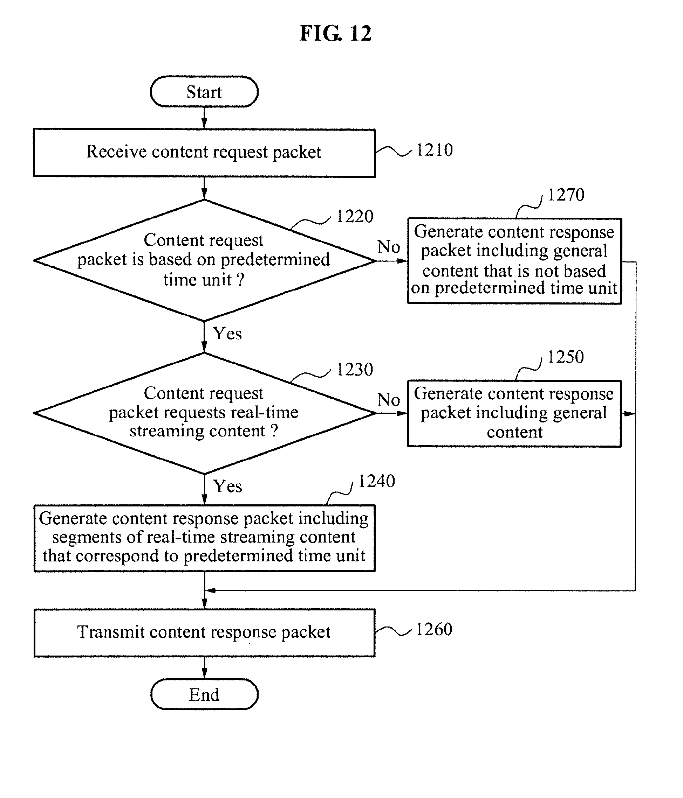

FIG. 12 illustrates an example of a communication method of a content provider when content based on a predetermined time unit, together with general content that is not based on a predetermined time unit, are transmitted in a CCN based on a content name.

Referring to FIG. 12, the content provider receives a content request packet in 1210, and determines whether the received content request packet is based on the predetermined time unit in 1220.

In 1220, the content provider may determine whether the content request packet is based on the predetermined time unit, depending on whether an identifier indicating a content request based on the predetermined time unit is included in a header of the content request packet or a name of content.

Based on a determination result obtained in 1220, the content provider may determine which one of real-time streaming content based on the predetermined time unit, and general content based on the predetermined time unit is requested by the content request packet.

In an example in which the content request packet is determined to be based on the predetermined time unit in 1220, the content provider may determine whether the content request packet requests real-time streaming content in 1230.

In 1230, the content provider may use information included in the header of the content request packet, to determine which one of the real-time streaming content based on the predetermined time unit, and the general content based on the predetermined time unit is requested by the content request packet. For example, when an indicator indicating real-time streaming content is included in the header of the content request packet, or when segment information included in the header is null, or when a preset value, for example "-1," is included in the header, the content provider may determine the real-time streaming content to be requested in 1230.

In an example in which the content request packet is determined to request the real-time streaming content in 1230, the content provider may generate a content response packet including segments of the real-time streaming content that correspond to the predetermined time unit in 1240.

In another example in which the content request packet is determined not to request the real-time streaming content in 1230, the content provider may generate a content response packet including general content in 1250.

In 1260, the content provider transmits the content response packet generated in 1240 or 1250.

In another example in which the content request packet is determined not to be based on the predetermined time unit in 1220, the content provider may generate a content response packet including general content that is not based on the predetermined time unit in 1270, and may transmit the generated content response packet to the content requester in 1260.

Hereinafter, a method of exchanging a content request packet and a content response packet between a content requester and a content provider, using a time-based interest protocol, will be described with reference to FIGS. 13 and 14.

FIG. 13 illustrates an example of a method of restoring a hole generated during transmission of segments between a content requester and a content provider using a time-based interest protocol in a CCN.

A content request packet transmitted in the time-based interest protocol may include, for example, information regarding a time duration or an identifier indicating a predetermined time unit. In the time-based interest protocol, based on the information, unlimited content segments may be generated from another node, for example a content provider 1330, and may be transferred for the predetermined time unit or time duration to a content requester 1310.

Since the content requester 1310 and the content provider 1330 request and transfer segments in a predetermined time unit, instead of a segment unit, a portion of the segments may be missing or out of order.

The content requester 1310 may determine whether a missing segment or an out-of-order segment is included in segments of content received from the content provider 1330.

Referring to FIG. 13, a segment 2 seg 2 is out of order during transmission of content "ccnx://sen/testfile.txt." In the following description, segment(s) that are missing or out of order during transmission, for example the segment 2 seg 2, may be defined to be "holes."

The content requester 1310 may detect holes, using segment numbers described in a name field of a content response packet including segment(s) of content.

The content requester 1310 may determine whether a portion of all content segments received from the content provider 1330 is missing or out of order (during transmission).

For example, when a missing segment or an out-of-order segment, namely a hole, is detected first, the content requester 1310 may wait for a predetermined time interval called "hole timeout" until the missing segment or the out-of-order segment is transmitted. The hole timeout may be calculated or specified by a network condition or a service scenario, before a hole recovery request packet is transmitted from the content requester 1310 to the content provider 1330.

The hole timeout may be calculated using a round trip time (RTT), for example, by an equation "Hole timeout = (RTT * constant value A)." The RTT may be continuously measured between a corresponding node and an adjacent node. The constant value A may be, for example, "1.5," "2.5," and the like. Additionally, the hole timeout may be determined using a number of segment(s) received after the content requester 1310 detects a hole. For example, referring to FIG. 13, when the content requester 1310 detects a hole (for example, the segment 2 seg 2), and then receives two segments, namely a segment 3 seg 3 and a segment 4 seg 4, the content requester 1310 may determine a time interval in which the two segments are received, to be a hole timeout.

The content requester 1310 may determine whether a missing segment or an out-of-order segment is transmitted for a predetermined time interval (for example, a hole timeout). Based on a result of the determining, the content requester 1310 may generate a content request packet requesting a missing segment or an out-of-order segment.

In an example in which a missing segment or an out-of-order segment is determined not to be transmitted for a hole timeout, the content requester 1310 may generate a content request packet requesting a missing segment or an out-of-order segment (for example, the segment 2). In this example, a general content request packet (for example, "ccnx://sen/testfile.txt/seg2") that does not include an identifier indicating a content request based on a predetermined time unit may be generated.

For example, a content request packet requesting a missing segment or an out-of-order segment may not include an identifier indicating a content request based on a predetermined time unit, and instead, may include a segment number of a missing segment or an out-of-order segment (for example, the segment 2 seg2) in a name field. In this example, the content request packet may correspond to the above-described "hole recovery request packet."

The content requester 1310 may transmit a content request packet requesting a missing segment or an out-of-order segment to the content provider 1330.

Depending on embodiments, the content requester 1310 may generate content request packets with different forms, based on a number of segments that are missing or out of order, and may transmit the generated content request packets to the content provider 1330.

The content requester 1310 may compare the number of the segments that are missing or out of order with a predetermined number of segments, and may generate content request packets that have different forms and that request a missing segment or an out-of-order segment, based on a result of comparison.

In an example in which the number of the segments that are missing or out of order is equal to or less than the predetermined number, the content requester 1310 may generate a general content request packet including segment numbers of the segments. In another example in which the number of the segments that are missing or out of order is greater than the predetermined number, the content requester 1310 may generate a content request packet that requests a missing segment or an out-of-order segment and that includes an identifier indicating a content request based on a predetermined time unit. The predetermined number may be determined based on a network condition or a service scenario, and may be set, for example, to "1" or "2."

For example, when a segment 5 is assumed to be missing or out of order, the content requester 1310 may transmit a segment number "5" or seg 5 of the segment 5 using a general content request packet, and may re-receive the segment 5 from the content provider 1330.

It may be inefficient for the content requester 1310 to generate 10 content request packets that respectively request 10 segments (for example, segments 11 to 20) that are missing or out of order. The content requester 1310 may simultaneously request the segments 11 to 20 using a single content request packet including an identifier indicating a content request based on a predetermined time unit. The content provider 1330 may transmit a content response packet including the segments 11 to 20 to the content requester 1310. In other words, a plurality of segments may be more efficiently transmitted.

FIG. 14 illustrates an example of a method of processing a content store of a network node using a time-based interest protocol in a CCN.

The content store of the network node may enhance network efficiency in the CCN. When a name of a content segment stored in the content store of the network node in the CCN is matched to a name of an interest, namely a content request packet, all nodes may respond to a content request.

For a content request based on a time unit, a content requester may transmit a content request packet with a name field in which a segment number is not described, to request a plurality of content segments using a single content request packet.

FIG. 14 illustrates a process of processing a cache that uses information of a starting segment and a predetermined time unit included in a header of a content request packet, for a content request based on a time unit.

To receive a response from a content store of a neighboring network node (for example, a node A 1430), a content requester 1410 may add, to a header of a content request packet, information regarding a starting segment of content (for example, segments seg 0 and seg 379, and the like) from which transmission is started, and a predetermined time unit (for example, T1) in which content "ccnx://sen/testfile.txt" continues to be transmitted, and may transmit the content request packet to an adjacent node, namely, the node A 1430. The information regarding the starting segment may include, for example, a number of a first starting segment from which transmission is started every predetermined time unit (for example, T1).

When a time unit-based content request packet is received, the node A 1430 may sequentially respond to all content segments stored in a cache of the node A 1430. The node A 1430 may store a segment 0 seg 0 through a segment 204 seg 204 among segments of real-time streaming content, and a node B 1450 may store all segments of content.

When the content request packet with the header including the information regarding the starting segment (for example, the segment seg 0) and the predetermined time unit (for example, T1) is received, the node A 1430 may sequentially provide the content requester 1410 with the segment 0 seg 0 through the segment 204 seg 204 stored in the cache.

The node A 1430 may generate a content request packet requesting content segments other than segments stored in the cache, and may transmit the generated content request packet to a next node, namely, the node B 1450. Additionally, the node A 1430 may transmit a time-based interest to the next node B 1450. The time-based interest may include a time interval shortened based on a cache processing time (for example, "T1-T2," or "T1-T3"), and a segment number of a starting segment that is not stored in the cache of the node A 1430. The "starting segment" may be understood to be a first segment among segments other than the segments stored in the cache.

When a content request packet with a header including a segment number of a starting segment (for example, a segment seg 205) and a time unit "T1-T2" is received from the node A 1430, the node B 1450 may sequentially respond to all content segments stored in a cache of the node B 1450. For example, when all content segments are not stored in the node B 1450, the node B 1450 may transmit a content request packet based on another time unit to a next node, to request segments other than segments stored in the cache.

When a predetermined time unit T1 expires, the content requester 1410 may transmit, to the node A 1430, a content request packet that includes information regarding a segment seg 379 next to a segment seg 378, received last by a content request packet corresponding to the predetermined time unit, and a time unit T1 next to the predetermined time unit.

Additionally, when the predetermined time unit T1 expires, the content requester 1410 may recognize a segment number of the segment seg 379 by the segment seg 378 received last in the predetermined time unit T1.

When the content request packet including the information regarding the next segment seg 379 and the time unit T1 next to the predetermined time unit is received from the content requester 1410, the node A 1430 may transfer, to the content requester 1410, segments (for example, segments seg 379 through seg 381) that are received already from the node B 1450, but that are not transferred due to expiration of the predetermined time unit T1.

A time unit required to transmit the segments (for example, segments seg 379 through seg 381) that are stored in the cache of the node A 1430, but that are not transferred to the content requester 1410 may be assumed to be "T3." The node A 1430 may transmit, to the next node, namely the node B 1450, a content request packet that includes a time interval (for example, "T1-T3") shortened due to a cache processing time, and a segment number of a starting segment seg 382 that is not stored in the cache of the node A 1430.

When the content request packet including the time interval (for example, "T1-T3") and the segment number of the starting segment seg 382 is received, the node B 1450 may transfer the starting segment seg 382 to the content requester 1410 through the node A 1430.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A communication method of a content requester to provide content in a Content-Centric Network (CCN) based on a content name, the communication method comprising:
generating a content request packet comprising an identifier indicating a content request based on a predetermined time unit, to request the content;
transmitting the content request packet; and
receiving segments of the content that correspond to the predetermined time unit.

2. The communication method of claim 1, wherein the content comprises either real-time streaming content, or general content.

3. The communication method of claim 1, wherein the generating comprises generating a content request packet requesting the segments of the content, using a name of the content.

4. The communication method of claim 1, wherein the generating comprises adding the identifier to a header of the content request packet or to a name of the content.

5. The communication method of claim 1, wherein the generating comprises adding, to a header of the content request packet, information regarding a starting segment of the content and the predetermined time unit in which the content continues to be transmitted.

6. The communication method of claim 5, further comprising:
transmitting a content request packet comprising information regarding a segment next to a segment received last by a content request packet corresponding to the predetermined time unit and a time unit next to the predetermined time unit, when the predetermined time unit expires.

7. The communication method of claim 1, further comprising:
adjusting the predetermined time unit, based on a characteristic of the content requester and a network environment.

8. The communication method of claim 1, further comprising:
storing the predetermined time unit corresponding to the content request packet in a Pending Interest Table (PIT).

9. The communication method of claim 1, further comprising:
deleting an entry corresponding to the content from a PIT, in response to a cancellation response packet that enables a request for the content to be cancelled.

10. The communication method of claim 9, wherein the deleting comprises deleting the entry corresponding to the content from the PIT, using a timeout value included in the header of the content request packet.

11. The communication method of claim 1, further comprising:
determining whether a missing segment or an out-of-order segment is included in the received segments; and
waiting for a predetermined time interval, when the missing segment or the out-of-order segment is detected.

12. The communication method of claim 11, further comprising:
determining whether the missing segment or the out-of-order segment is transmitted to the content requester for the predetermined time interval;
generating a content request packet requesting the missing segment or the out-of-order segment, based on a result of the determining; and
transmitting the content request packet requesting the missing segment or the out-of-order segment.

13. The communication method of claim 12, wherein the content request packet requesting the missing segment or the out-of-order segment has a name field comprising a segment number of the missing segment or the out-of-order segment, instead of comprising an identifier indicating a content request based on the predetermined time unit.

14. The communication method of claim 12, wherein the generating of the content request packet requesting the missing segment or the out-of-order segment comprises:
comparing a number of segments that are missing or out of order with a predetermined number; and
generating content request packets that have different forms and that request the missing segment or the out-of-order segment, based on a result of the comparing.

15. The communication method of claim 14, wherein the generating of the content request packets comprises, when the number of the segments that are missing or out of order is equal to or less than the predetermined number, generating a content request packet comprising a segment number of the missing segment or the out-of-order segment.

16. The communication method of claim 14, wherein the generating of the content request packets comprises, when the number of the segments that are missing or out of order is greater than the predetermined number, generating a content request packet that requests the missing segment or the out-of-order segment and that comprises an identifier indicating a content request based on the predetermined time unit.

17. The communication method of claim 1, further comprising:
allocating a storage space for real-time streaming content to a content store, when the content is the real-time streaming content.

18. The communication method of claim 17, further comprising:
storing a latest segment among received segments of the real-time streaming content in the storage space.

19. The communication method of claim 18, further comprising:
requesting retransmission of the real-time streaming content using the latest segment, when a missing segment or an out-of-order segment is included in the segments of the real-time streaming content.

20. A communication method of a content provider to provide content in a Content-Centric Network (CCN) based on a content name, the communication method comprising:
receiving a content request packet comprising an identifier indicating a content request based on a predetermined time unit;
determining whether the content is included in a content store or a buffer of the content provider;
generating a content response packet comprising segments of the content, based on a result of the determining, the segments corresponding to the predetermined time unit; and
transmitting the content response packet.

21. The communication method of claim 20, wherein the content comprises either real-time streaming content, or general content.

22. The communication method of claim 20, wherein the determining comprises determining whether the content is included in the content store or the buffer, using a name of the content.

23. The communication method of claim 20, further comprising:
generating a cancellation response packet that enables a request for the content to be cancelled, when the content ends.

24. The communication method of claim 23, wherein the generating of the cancellation response packet comprises generating the cancellation response packet, by describing preset information in a segment number of a last segment of the content, or by setting a payload size of the last segment to a preset value.

25. The communication method of claim 23, further comprising:
transmitting the cancellation response packet.

26. The communication method of claim 20, wherein the receiving comprises receiving a content request packet comprising information regarding a starting segment of the content and the predetermined time unit in which the content continues to be transmitted.

27. The communication method of claim 20, wherein the receiving comprises, when the predetermined time unit expires, receiving a content request packet comprising information regarding a segment next to a segment received last by a content request packet corresponding to the predetermined time unit and a time unit next to the predetermined time unit.

28. The communication method of claim 20, wherein the receiving comprises receiving a content request packet comprising a segment number of a first segment among segments of the content that are not stored in a content store of an intermediate node, and a time unit obtained by subtracting a time required to process a segment stored in the content store of the intermediate node from the predetermined time unit.

29. The communication method of claim 20, further comprising:
receiving a content request packet requesting a missing segment or an out-of-order segment among segments of the content.

30. The communication method of claim 29, wherein the content request packet requesting the missing segment or the out-of-order segment has a name field comprising a segment number of the missing segment or the out-of-order segment, instead of comprising an identifier indicating a content request based on the predetermined time unit.

31. A communication method of a content provider to provide content in a Content-Centric Network (CCN) based on a content name, the communication method comprising:
receiving a content request packet;
determining whether the content request packet is based on a predetermined time unit;
deciding which one of real-time streaming content based on the predetermined time unit and general content based on the predetermined time unit is requested by the content request packet, based on a result of the determining;
generating a content response packet based on the deciding; and
transmitting the content response packet.

32. The communication method of claim 31, wherein the determining comprises determining whether the content request packet is based on the predetermined time unit, based on determining whether an identifier indicating a content request based on the predetermined time unit is included in a header of the content request packet or a name of the content.

33. The communication method of claim 31, wherein the deciding comprises deciding, using information included in the header of the content request packet, which one of real-time streaming content based on the predetermined time unit and general content based on the predetermined time unit is requested by the content request packet

34. The communication method of claim 31, wherein the generating comprises generating a content response packet comprising segments of the real-time streaming content, when the real-time streaming content based on the predetermined time unit is decided to be requested.

35. The communication method of claim 31, wherein the generating comprises generating a content response packet comprising the general content based on the predetermined time unit, when the general content based on the predetermined time unit is decided to be requested.

36. The communication method of claim 31, further comprising:
generating a cancellation response packet that enables a request for the content to be cancelled, when the content ends.

37. The communication method of claim 36, wherein the generating of the cancellation response packet comprises generating the cancellation response packet, by describing preset information in a segment number of a last segment of the content, or by setting a payload size of a last segment to a preset value.

38. The communication method of claim 31, wherein the receiving comprises receiving a content request packet comprising information regarding a predetermined time unit in which the content continues to be transmitted.

39. The communication method of claim 38, further comprising:
receiving a content request packet requesting a missing segment or an out-of-order segment among segments of the content,
wherein the content request packet requesting the missing segment or the out-of-order segment has a name field comprising a segment number of the missing segment or the out-of-order segment, instead of comprising an identifier indicating a content request based on the predetermined time unit.

40. The communication method of claim 31, further comprising:
generating a content response packet comprising general content that is not based on the predetermined time unit, when the content request packet is determined not to be based on the predetermined time unit.

41. A non-transitory computer readable recording medium storing a program to cause a computer to implement the communication method of one of claims 1 to 40.
